# EUROPEAN PATENT SPECIFICATION

(11) **EP 0 853 650 B1**
(45) Date of publication and mention of the grant of the patent: **07.07.1999**
(21) Application number: 96932727.9
(22) Date of filing: 07.10.1996
(51) Int. Cl.: C09D 11/00, C08G 18/38, C09B 69/10

(54) **HOT MELT INK JET VEHICLE**
SCHMELZBARE TINTENSTRAHL-TINTENMEDIEN
VEHICULE POUR JET D'ENCRE THERMOFUSIBLE

(30) Priority: 06.10.1995 GB 9520470
(43) Date of publication of application: 22.07.1998
(73) Proprietor: Coates Brothers PLC, Orpington Kent BR5 3PP (GB)
(72) Inventor: EVANS, Philippa, Catherine, Penclawdd Swansea West Glamorgan SA4 3XE (GB); WILLIAMS, Kevin, George, Avon BA3 3UT (GB); HALL, Stephen, Antony, South Glamorgan CF64 2WN (GB)
(74) Representative: Waldren, Robin Michael
(86) International application number: GB9602446
(87) International publication number: WO9713816

(56) References cited:
- EP-A- 0 339 421
- FR-A- 2 060 999
- FR-A- 2 442 257
- CHEMICAL ABSTRACTS, vol. 80, no. 8, 25 February 1974 Columbus, Ohio, US; abstract no. 38395, NAGASHIMA, SHINICHIRO ET AL: "Polymeric dyes" XP002022635 & JP,A,48 008 562 (CANON K. K.)

## Description

This invention is concerned with the formulation of hot melt ink jet base materials which are coloured.

Ink jet printing generally comprises forming a patterned array of droplets of an ink upon a substrate to form the desired indicia on the substrate. In a hot melt ink jet printing process, the ink is one which is normally solid at ambient temperatures and which is applied to the substrate in molten form so that the droplets solidify on cooling on the substrate.

Typically, the ink employed in hot melt ink jet printing comprises a fusible carrier together with a colourant, i.e. a pigment or dyestuff. Suitable materials for use as or in the vehicles for inks for hot melt ink jet printing (hereinafter, simply, "hot melt inks") should be relatively hard and non-tacky at ambient temperatures whilst being capable of melting to form mobile liquid inks. Suitably, they have a melting point of at least 65°C.

Patent Specification WO 94/14902 describes the use of certain urethane oligomers as hot melt ink vehicles. These oligomers are the reaction products of diisocyanates with a monohydric alcohol component, optionally followed by another monohydric component or a dihydric alcohol component followed by a monohydric alcohol component. These materials have melting points in excess of 65°C, low melt viscosities and good colour and viscosity stabilities at elevated temperatures. However they must be dyed by addition of a separate dyestuff in order to be used as ink jet inks.

Common problems which arise with the use of dyestuffs in ink jet inks are those of lightfastness and bleed. The former refers to the tendency of the dyes to fade in colour when exposed to long periods of UV radiation, eg. from sunlight. The latter refers to the tendency of dyestuffs to leach from the ink into the substrate onto which the ink has been printed giving a fuzzy image or causing the image to appear on the reverse of the substrate (also called show-through).

It has now been found that, in accordance with the present invention, that certain dyestuffs may be reacted onto the backbone of the aforementioned hot melt ink vehicles, yielding coloured materials which display much improved light stabilities and little tendency for the dye to bleed into the substrate on to which the ink has been printed. These colourants may be used as the majority constituent of a hot melt ink vehicle or simply as a colouring additive to an ink jet ink in which another, colourless, material makes up the majority of the vehicle.

Radiation-curable coloured materials comprising a dye reacted into the backbone of an oligomeric or polymeric materials are disclosed in GB-A-2 038 849. However, these materials are liquid at room temperature and are unsuitable for hot-melt applications.

A coloured polymer coating formed by bonding of a reactive colourant to a cross-linking agent which itself is used to cross-link acrylic polymer molecules is disclosed in US-A-5 231 135. This is unsuitable for use as a hot melt ink vehicle.

Yet other materials which contain dye moieties and are polymers or oligomers but which also are unsuitable for use in hot melt inks are disclosed in US-A-5 264, 507, US-A-5 098 475, EP-A-0 540 248, EP-A-0 339 421, FR-A-2 060 999 and FR-A-2 442 257.

The present invention now provides a coloured material suitable for use in a hot melt ink, the material being solid at 25°C, having a melting point of at least 65°C and a viscosity less than 200 centipoise at 125°C, the material comprising an oligomeric hot melt ink jet vehicle formed of molecules having a backbone and at least one pendant side-chain in the form of a dyestuff reacted into the backbone, the material being obtainable as the reaction product of an aliphatic or aromatic mono- or di-isocyanate with a dyestuff which is a hydroxyl group functional dye component and one or more other fully saturated materials selected from mono- and dihydric alcohols, primary and secondary monoamines, diprimary diamines, functional amides and hydroxyl functional amines.

For the avoidance of doubt, in the context of the present invention, the term "dyestuff' includes any substance endowing to the material, a coloured pigmentation within the visible spectrum or any other "optical" property such as UV fluorescence. The words "dyed" and "coloured" are therefore to be interpreted in this light.

Suitable functional amides include those which are the reaction products of primary or secondary monoamines, optionally having hydroxyl functionality, or diprimary diamines, and mixtures thereof, together with mono- or difunctional carboxylic acids, also optionally having hydroxyl functionality, and mixtures thereof.

According to one embodiment of the invention, there is provided a material suitable for use as a coloured vehicle in a hot melt ink, and obtainable by reacting an aliphatic or aromatic mono- or di-isocyanate with an at least stoichiometric amount of:
(i) a hydroxyl group functional dye component;
(ii) a hydroxyl group functional dye component followed by one or a mixture of monohydric alcohols; or
(iii) a hydroxyl group functional dye component followed by a dihydric alcohol component followed by a monohydric alcohol component;
(iv) a hydroxyl group functional dye component followed by one or a mixture of primary or secondly monoamine components;
(v) a hydroxyl group functional dye component followed by a diprimary diamine component, followed by a primary monoamine component;
(vi) a hydroxyl group functional dye component, followed by a diprimary diamine component, followed by a monohydric alcohol component;
(vii) a hydroxyl group functional dye component followed by the reaction product of one equivalent of a primary diamine component with one equivalent of a monocarboxylic acid and one equivalent of an hydroxy functional monocarboxylic acid;
(viii) a hydroxy group functional dye component, followed by the reaction product of one equivalent of a diprimary diamine component with one equivalent of a monocarboxylic acid;
(ix) a hydroxyl group functional dye component followed by the reaction product of one equivalent of a primary monoamine with hydroxyl group functionality, with one equivalent of monocarboxylic acid; or
(x) a hydroxyl group functional dye component followed by the reaction product of (vii) or (viii), but where the acid functionality is made up of a mixture of any two or more of a monocarboxylic acid, a dicarboxylic acid and hydroxy monocarboxylic acids.

In all cases where the diprimary diamine component is reacted initially with the isocyanate component, it is used in an amount of not more than 50% of the stoichiometric amount of other reactive groups required to react with the isocyanate groups on the diisocyanate. This is not true in the materials which are first reacted with carboxylic acids to form amides.

Materials according to the present invention (hereinafter referred to as oligomeric colorants) are solid at room temperature (25°C). By "solid' is meant hard solid or waxy solid, capable of use as a hot melt ink vehicle. They must also have a melting point of at least 65°C. This means a melting point as determined by the DSC method. It should be noted that not all of the materials obtainable by the reactions outlined above will have a melting point in excess of 65°C. Experiments have proved that there is a wide range of melting points possible for these materials and that it is extremely difficult to predict, with respect to molecular morphology or weight, what the melting point of a particular material will be. The determination of which materials are suitable therefore has to be left to experiment and trial. The oligomeric colourants most preferably also have a melting point no higher than, and preferably less than 125°C and especially, no higher than or less than 100°C.

Suitable isocyanates for use in the preparation of the oligomeric colorants include isophorone diisocyanate, toluene diisocyanate, diphenylmethane-4,4-diisocyanate (MDI), hexamethylene-1,6-diisocyanate, octadecylmonoisocyanate, naphthalene-1,5-diisocyanate, 3,3'-dimethyl-4,4'-biphenyldiisocyanate, dicyclohexylmethane-4,4'-diisocyanate, trimethylhexamethylene diisocyanate and tetramethylene xylene diisocyanate. Of these diisocyanates, the aliphatic diisocyanates are generally preferred and, in particular isophorone diisocyanate, trimethylene hexamethylene diisocyanate and octadecylmonoisocyanate have been found to give particularly useful oligomeric colorants.

The dyestuffs which have proven useful in this application are those which contain an element of hydroxyl functionality which can form urethane linkages with the isocyanate groups. Such dyes are those in the Reactint urethane colourants range produced by Milliken Chemicals Inc.

A wide variety of monohydric aliphatic alcohols may be used to produce oligomeric colorants of the present invention, e.g. C₁ to C₂₂ alcohols. Also etherified dihydric alcoholic materials can be utilised, such as propylene glycol methyl ether (PGME), dipropylene glycol methyl ether (DPGME), propylene glycol phenyl ether (PPH) or tripropylene glycol butyl ether (TPGBE). When the monohydric alcohol component is an esterified dihydric alcohol, the esterifying acid may be an ethylenically unsaturated acid such as acrylic or methacrylic acid, thereby introducing ethylenic unsaturation to the oligomeric colorant, rendering it suitable for further cure by UV or electron beam methods once it has been applied to a substrate by hot melt printing. Dihydric alcohols which may be used include ethylene glycol, propylene glycol, polyethylene glycols, polypropylene glycols or 1,6-hexanediol.

Primary and secondary amines which may be used may cover the range between C₁ and C₂₂ monoamines such as ethylamine, octylamine, dodecylamine, octadecylamine, hexadecylamine, di-n-butylamine, N-methyloctadecylanine, neopentadiamine. di-n-tallow amine and di-n-cocoamine.

Suitable diamines include isophorone diamine, neopentane diamine, hexamethylene diamine, ethylene diamine and polyoxypropylene diamines.

Diamines suitable for the preparation of the hydroxy or amine functional amides are ethylene diamine, neopentane diamine, 2,4,4-trimethylhexanediamine, 2-butyl 2-ethyl 1,5 pentanediamine, 1,3 diaminopentane isophorone diamine and 2 methyl 1,5 pentamethylene diamene. Hydroxy functional primary and secondary amines which may be used include ethanolamine, diethanolamine and n-methyl ethanolamine.

Monocarboxylic acids which are suitable for this application include stearic acid, acetic acid, 3,5,5 trimethylhexanoic acid, propanoic acid. decanoic acid, 2,2 dimethylpropionic acid, isooctanoic acid, isoheptanoic acid, isobutyric acid or isodecanoic acid.

Hydroxy functional monocarboxylic acids which may be used are 12-hydroxystearic acid, 12-hydroxydodecanoic acid or 2-hydroxyhexanoic acid, 16-hydroxyhexadecanoic acid, 2-hydroxy isobutyric acid. The acid functionality in the reaction may be made up of pure acids or a mixture of any of those mentioned above.

The reaction between the isocyanate and the amine, hydroxy or carboxylic acid groups will proceed without the use of a catalyst. If however, a catalyst is required to facilitate complete reaction of the isocyanate groups, materials such as dibutyl tin dilaurate or stannous octoate can be used.

The average molecular weight of the oligomeric colorants is suitably from 500 to 3000, preferably from 600 to 2000.

For some applications of hot melt inks, it is desirable that the vehicles, the oligomeric colorants, be transparent to light. Again it is virtually impossible to predict whether any particular material will be transparent or not. However, here again it is a matter of simple routine trial and experiment to determine which materials are most suited to the application. It is essential that the oligomeric colorants should have low viscosities (i. e. less than 200 centipoise at 125°C) and, here again, it is difficult to make predictions as to the viscosity of any particular oligomeric colourant.

The oligomeric colorants of the invention are used as vehicles, or components of the vehicles, of hot melt inks. In addition to the oligomeric colorants, such inks may also contain further colorants, such as dyes or pigments, viscosity adjusting additives and anti-oxidants. Generally the vehicle (oligomeric colorant) will form from 10 to 90% by weight, especially 30-75% by weight of any ink, with viscosity modifying additives making up the bulk of the remainder of the ink and further colorants or antioxidants making up the balance.

The present invention will now be explained in more detail by way of the following non-limiting examples.

### Example 1

One equivalent of octadecylisocyanate was charged to a reaction flask fitted with a stirrer, a thermometer and a nitrogen sparge line. The flask was heated to 65°C and one equivalent of a hydroxy functional dye. Red X52 (Milliken Chemicals Inc.) was carefully added plus catalyst (dibutyl tin dilaurate), at a rate which ensured that the temperature of reaction did not climb above 100°C. When all of the dye had been added and all exotherms had ceased, the reaction was heated to 150°C and held at this temperature until the isocyanate content fell below 30 ppm (as determined by titration and IR analysis).

The clear, red coloured solid produced by this reaction had a softening point, as determined by differential scanning calorimetry, of 88°C and a viscosity, of 20 centipoise at 125°C.

### Example 2

One mole of trimethylhexamethylene diisocyanate was charged to a reaction flask fitted with a stirrer, thermometer and nitrogen sparge line and warmed to 65°C. To this was added 1.6 moles of octadecanol and 0.4 moles of Yellow X15 reactive dyestuff (Milliken Chemicals Inc.). The dye solution was added slowly, so that the resultant exotherm did not raise the temperature of the reaction above 100°C. When the addition was complete and the batch was no longer exotherming, it was heated to 150°C and held at this temperature until the free isocyanate levels in the vessel had fallen to less than 30 ppm. The batch was then discharged to yield an opaque yellow solid with a DSC softening point of 52 °C, and a viscosity of 25 centipoise at 125°C.

### Example 3

One mole of trimethylhexamethylene diisocyanate was charged to a flask and heated to 60°C with stirring and under an inert atmosphere of nitrogen. Octadecylamine, 1.62 moles, was then drip fed into the flask so that the reaction temperature did not climb above 100°C. When all the amine had been added, 0.38 moles of reactive dyestuff, Blue 17AB (Milliken Chemicals Inc.) and catalyst were slowly added, again at a rate to keep the reaction temperature below 100°C. When the reaction stopped exotherming, it was heated to 150°C and held there until the free isocyanate content had dropped below 30 ppm.

This reaction produced a transparent blue solid, with a DSC softening point of 80°C, and a viscosity of 210 centipoise at 125°C.

### Example 4

A hydroxy functional diamide material was prepared by reacting one mole of ethylene diamine with 1.0 moles of 3,5,5-trimethylhexanoic acid and 1.0 moles of 12-hydroxystearic acid.

One mole of trimethyl hexamethylene diisocyanate was charged to a reaction flask and heated under stirring and nitrogen to 65°C. 1.0 mole of the diamide material produced by the reaction above was powdered and slowly fed into the isocyanate, so that the reaction temperature did not rise above 100°C. When all the diamide was added and the exotherm had abated, reactive dye Red X52 (Milliken Chemicals Inc.) (1.0 moles) and catalyst (dibutyl tin dilaurte) was fed into the reaction in a similar way. When all exotherming had ceased the batch was heated to 155°C and maintained at this temperature until the level of unreacted isocyanate groups had fallen below 30 ppm.

The transparent red solid material produced had a DSC softening point of 88°C, and a viscosity of 600 centipoise at 125°C.

In the light of this disclosure, modifications of the described examples, as well as other examples, all within the scope of the appended claims, will now become apparent to persons skilled in the art.

## Claims

1. A coloured material suitable for use in a hot melt ink, the material being solid at 25°C, having a melting point of at least 65°C and a viscosity less than 200 centipoise at 125°C, the material comprising an oligomeric hot melt ink jet vehicle formed of molecules having a backbone and at least one pendant side-chain in the form of a dyestuff reacted into the backbone, the material being obtainable as the reaction product of an aliphatic or aromatic mono- or di-isocyanate with a dyestuff which is a hydroxyl group functional dye component and one or more other fully saturated materials selected from mono- and dihydric alcohols, primary and secondary monoamines. diprimary diamines, functional amides and hydroxyl functional amines.

2. A material according to claim 1, formed as a reaction product including at least one functional amide selected from those which are the reaction products of primary or secondary monoamines, optionally having hydroxyl functionality, or diprimary diamines, and mixtures thereof, and mono- or difunctional carboxylic acids, also optionally having hydroxyl functionality, and mixtures thereof.

3. A material according to either preceding claim, obtainable by reacting an aliphatic or aromatic mono- or di-isocyanate with an at least stoichiometric amount of:
(i) a hydroxyl group functional dye component;
(ii) a hydroxyl group functional dye component followed by one or a mixture of monohydric alcohols; or
(iii) a hydroxyl group functional dye component followed by a dihydric alcohol component followed by a monohydric alcohol component;
(iv) a hydroxyl group functional dye component followed by one or a mixture of primary or secondary monoamine components;
(v) a hydroxyl group functional dye component followed by a diprimary diamine component, followed by a primary monoamine component;
(vi) a hydroxyl group functional dye component, followed by a diprimary diamine component, followed by a monohydric alcohol component;
(vii) a hydroxyl group functional dye component followed by the reaction product of one equivalent of a primary diamine component with one equivalent of a monocarboxylic acid and one equivalent of a hydroxy functional monocarboxylic acid;
(viii) a hydroxy functional dye component, followed by the reaction product of one equivalent of a diprimary diamine component with one equivalent of a monocarboxylic acid;
(ix) a hydroxyl group functional dye component followed by the reaction product of one equivalent of a primary monoamine with hydroxyl group functionality, with one equivalent of monocarboxylic acid; or
(x) a hydroxyl group functional dye component followed by the reaction product of (vii) or (viii), but where the acid functionality is made up of a mixture of any two or more of a monocarboxylic acid, a dicarboxylic acid and hydroxy monocarboxylic acids.

4. A material according to either of claims 1 or 2, wherein the isocyanate is selected from isophorone diisocyanate, toluene diisocyanate, diphenylmethane-4,4-diisocyanate (MDI), hexamethylene-1,6-diisocyanate, octadecylmonoisocyanate, naphthalene-1,5-diisocyanate, 3,3'-dimethyl-4,4'-biphenyldiisocyanate, dicyclohexylmethane-4,4'-diisocyanate, trimethylhexamethylene diisocyanate and tetramethylene xylene diisocyanate.

5. A material according to either of claims 2 or 3, obtainable from reactants which include at least one monohydric aliphatic alcohol selected from C₁ to C₂₂ alcohols.

6. A material according to either of claims 2 or 3, obtainable from reactants which include at least one etherified dihydric alcoholic material selected from propylene glycol methyl ether (PGME), dipropylene glycol methyl ether (DPGME), propylene glycol phenyl ether (PPH) and tripropylene glycol butyl ether (TPGBE).

7. A material according to either of claims 2 or 3, obtainable from reactants which include at least one monohydric esterified dihydric alcohol component in which, the esterifying acid is an ethylenically unsaturated acrylic or methacrylic acid.

8. A material according to either of claims 2 or 3, obtainable from reactants which include at least one dihydric alcohol selected from ethylene glycol, propylene glycol, polyethylene glycols, polypropylene glycols and 1,6-hexanediol.

9. A material according to either of claims 2 or 3, obtainable from reactants which include at least one primary or secondary C₁ - C₂₂ monoamine selected from ethylamine, octylamine, dodecylamine, octadecylamine, hexadecylamine, di-n-butylamine, neopentadiamine, N-methyl octadecylamine, di-n-tallow amine and di-n-cocoamine.

10. A material according to either of claims 2 or 3, obtainable from reactants which include at least one diprimary diamine selected from isophorone diamine, neopentane diamine, hexamethylene diamine, ethylene diamine and polyoxypropylene diamines.

11. A material according to either of claims 2 or 3, obtainable from reactants which include at least one functional amide obtainable as the reaction product of at least one diamine selected from ethylene diamine, neopentane diamine, 2,4,4-trimethylhexanediamine, isophorone diamine, 2-butyl 2-ethyl 1,5, pentanediamine, 1,3 diaminopentane and 2 methyl 1,5 pentamethylene diamene.

12. A material according to either of claims 1 or 2, obtainable as the reaction product of at least one hydroxy functional amine selected from ethanolamine, diethanolamine and n-methyl ethanolamine.

13. A material according to either of claims 2 or 3, obtainable from reactants which include at least one monocarboxylic acid selected from stearic acid, acetic acid, propanoic acid, 3,5,5 trimethylhexanoic acid, decanoic acid, 2,2 dimethylpropionic acid, isooctanoic acid, isoheptanoic acid, isobutyric acid or isodecanoic acid.

14. A material according to either of claims 2 or 3, obtainable from reactants which include at least one hydroxy functional monocarboxylic acid selected from hydroxystearic acid, 16-hydroxyhexadecanoic acid. 2-hydroxyisobutyric acid, 12-hydroxydodecanoic acid or 2-hydroxyhexanoic acid.

15. A material according to any preceding claim, having an average molecular weight from 500 to 3000, preferably from 600 to 2000.

16. A hot melt ink comprising a material according to any preceding claim.

## Patentansprüche

1. Für den Gebrauch in einer heißschmelzbaren Tinte geeignetes gefärbtes Material, wobei das Material bei 25°C einen Feststoff darstellt und einen Schmelzpunkt von wenigstens 65°C sowie eine Viskosität von weniger als 200 Centipoise bei 125°C aufweist, wobei das Material einen oligomerhaltigen Träger für den Strahl der heißschmelzbaren Tinte beinhaltet, welcher von Molekülen gebildet wird mit einem Grundgerüst und wenigstens einer hängenden Seitenkette in Form eines Farbstoffes, der durch Reaktion an das Grundgerüst angegliedert worden ist, wobei das Material erzielt werden kann als ein Reaktionsprodukt aus einem aliphatischen oder einem aromatischen Mono- oder Di-isocyanat mit einem Farbstoff, der eine Farbstoffkomponente mit einer funktionellen Hydroxylgruppe ist, und einem oder mehreren anderen vollständig gesättigten Materialien, die ausgewählt werden unter einwertigen und zweiwertigen Alkoholen, primären und sekundären Monaminen, di primären Diaminen, funktionellen Amiden und hydroxyl funktionellen Aminen.

2. Material gemäß Anspruch 1, welches gebildet wird als ein Reaktionsprodukt das wenigstens ein funktionelles Amid umfaßt, das ausgewählt worden ist unter denjenigen welche die Reaktionsprodukte sind von primären und sekundären Monaminen, welche fakultativ eine Hydroxylfunktionalität aufweisen, oder diprimären Diaminen, und Mischungen derselben, und mono-und difunktionellen Karbonsäuren, welche ebenfalls fakultativ eine Hydroxylfunktionalität aufweisen, und Mischungen derselben.

3. Material gemäß irgendeinem der vorhergehenden Ansprüche, welches erzielt werden kann durch Reaktion eines aliphatischen oder aromatischen Mono- oder Di-isocyanates mit wenigstens einer stöchiometrischen Menge:
(i) einer Farbstoffkomponente mit einer funktionellen Hydroxylgruppe;
(ii) einer Farbstoffkomponente mit einer funktionellen Hydroxylgruppe, gefolgt von einem einwertigen Alkohol oder von einem Gemisch von einwertigen Alkoholen; oder
(iii) einer Farbstoffkomponente mit einer funktionellen Hydroxyl-gruppe, gefolgt von einer Komponente eines zweiwertigen Alkohols, gefolgt von einer Komponente eines einwertigen Alkohols;
(iv) einer Farbstoffkomponente mit einer funktionellen Hydroxylgruppe, gefolgt von einer Komponente eines primären oder sekundären Monoamins oder von einem Gemisch solcher Komponenten;
(v) einer Farbstoffkomponente mit einer funktionellen Hydroxylgruppe, gefolgt von einer Komponente eines diprimären Diamins, gefolgt von einer Komponenten eines primären Monoamins;
(vi) einer Farbstoffkomponente mit einer funktionellen Hydroxylgruppe, gefolgt von einer Komponente eines diprimären Diamins, gefolgt von einer Komponenten eines einwertigen Alkohols;
(vii) einer Farbstoffkomponente mit einer funktionellen Hydroxylgruppe, gefolgt von dem Reaktionsprodukt aus einem Äquivalent einer Komponente eines primären Diamins mit einem Äquivalent einer Monokarbon-säure und einem Äquivalent einer hydroxyfunktionellen Monokarbonsäure;
(viii) einer Farbstoffkomponente mit einer Hydroxyl-funktionalität, gefolgt von dem Reaktionsprodukt aus einem Äquivalent einer Komponente eines diprimären Diamins mit einem Äquivalent einer Monokarbon-säure;
(ix) einer Farbstoffkomponente mit einer funktionellen Hydroxylgruppe, gefolgt von dem Reaktionsprodukt aus einem Äquivalent eines primären Monoamins mit einer Hydroxylgruppenfunktionalität mit einem Äquivalent einer Monokarbonsäure; oder
(x) einer Farbstoffkomponente mit einer funktionellen Hydroxylgruppe, gefolgt von dem Reaktionsprodukt aus (vii) oder aus (viii), wo jedoch die Säurefunktionalität besteht aus einer Mischung aus gleich welchen unter zwei oder mehr Monokarbonsäuren, einer Dikarbonsäure und Hydroxymonokarbonsäuren.

4. Material gemäß irgendeinem der Ansprüche 1 oder 2, bei welchem das Isocyanat ausgewählt wird unter Isophorondiisocyanat, Toluoldiisocyanat, Diphenylmethan-4,4'-diisocyanat (MDI), Hexamethylen-1,6-diisocyanat, Octödecylmonoisocyanat, Naphthalin-1,5-diisocyanat, 3,3'-Dimethyl -4,4'-biphenyldiisocyanat, Dicylohexylmethan-4,4'-diisocyanat, Trimethylhexamethylen-diisocyanat und Tetramethylen-xylen-diisocyanat.

5. Material gemäß irgendeinem der Ansprüche 2 oder 3, welches erzielt werden kann aus Reaktanden, die wenigstens einen unter den Alkoholen mit C₁ bis C₂₂ ausgewählten einwertigen aliphatischen Alkohol enthalten.

6. Material gemäß irgendeinem der Ansprüche 2 oder 3, welches erzielt werden kann aus Reaktanden, die wenigstens ein verethertes Material aus einem zweiwertigen Alkohol enthalten, welches ausgewählt worden ist unter Propylenglykolmethylether (PGME), Dipropylenglykolmethylether (DPGME), Propylenglykolphenylether (PPH) und Tripropylenglykolbutylether (TPGBE).

7. Material gemäß irgendeinem der Ansprüche 2 oder 3, welches erzielt werden kann aus Reaktanden, die wenigstens eine einwertige veresterte Komponente eines zweiwertigen Alkohols enthalten, in welchem die veresternde Säure von einer ethylenungesättigten Acryl- oder Methacryl säure gebildet wird.

8. Material gemäß irgendeinem der Ansprüche 2 oder 3, welches erzielt werden kann aus Reaktanden, die wenigstens einen zweiwertigen Alkohol enthalten, welcher ausgewählt worden ist unter Ethylenglykol, Propylenglykol, Polyethylenglykolen, Polypropylenglykolen und 1,6-Hexandiol.

9. Material gemäß irgendeinem der Ansprüche 2 oder 3, welches erzielt werden kann aus Reaktanden, die wenigstens ein primäres oder sekundäres C₁-C₂₂ Monoamin enthalten, welches ausgewählt worden ist unter Ethylamin, Octylamin, Dodecylamin, Octadecylamin, Hexadecylamin, Di-n-Butylamin, Neopentadiamin, N-methyloctadecylamin, Di-n-Talgamin und Di-n-Cocoamin.

10. Material gemäß irgendeinem der Ansprüche 2 oder 3, welches erzielt werden kann aus Reaktanden, die wenigstens ein diprimäres Diamin enthalten, welches ausgewählt worden ist unter Isophorondiamin, Neopentandiamin, Hexamethylendiamin, Ethylendiamin, Polyoxypropylendiamin.

11. Material gemäß irgendeinem der Ansprüche 2 oder 3, welches erzielt werden kann aus Reaktanden, die wenigstens ein funktionelles Amid enthalten, welches erzielt werden kann als das Reaktionsprodukt aus wenigstens einem Diamin, das ausgewählt worden ist unter Ethylendiamin, Neopentandiamin, 2,4,4-Trimethylhexandiamin, Isophorondiamin, 2-Butyl-2-ethyl -1,5-pentandiamin, 1,3-Diaminopentan und 2-Methyl-1,5-pentamethylendiamin.

12. Material gemäß irgendeinem der Ansprüche 1 oder 2, welches erzielt werden kann als das Reaktionsprodukt aus wenigstens einem hydroxyfunktionellen Amin, das ausgewählt worden ist unter Ethanolamin, Diethanolamin, und n-Methylethanolamin.

13. Material gemäß irgendeinem der Ansprüche 2 oder 3, welches erzielt werden kann aus Reaktanden, die wenigstens eine Monokarbonsäure enthalten, welche ausgewählt worden ist unter Stearinsäure, Essigsäure, Propionsäure, 3,5,5-Trimethylhexansäure, Decansäure, 2,2-Dimethylpropionsäure, Isooctansäure, Isoheptansäure, Isobuttersäure und Isodecansäure.

14. Material gemäß irgendeinem der Ansprüche 2 oder 3, welches erzielt werden kann aus Reaktanden, die wenigstens eine hydroxyfunktionelle Monokarbonsäure enthalten, welche ausgewählt worden ist unter Hydroxystearinsäure, 16-Hydroxyhexadecansäure, 2-Hydroxyisobuttersäure, 12-Hydroxydodecansäure, oder 2-Hydroxyhexansäure.

15. Material gemäß irgendeinem der vorhergehenden Ansprüche mit einem durchschnittlichen Molekulargewicht von 500 bis 3000, vorzugsweise von 600 bis 2000.

16. Heißschmelzbare Tinte die ein Material gemäß irgendeinem der vorhergehenden Ansprüche aufweist.

## Revendications

1. Matériau coloré, adapté à une utilisation dans une encre thermofusible, le matériau étant solide à 25°C et ayant un point de fusion d'au moins 65°C ainsi qu'une viscosité inférieure à 200 centipoise à 125°C, le matériau comprenant un véhicule oligomère pour jet d'encre thermofusible formé de molécules possédant un squelette et au moins une chaîne latérale pendante sous la forme d'une matière colorante incorporée par une réaction dans le squelette, le matériau pouvant être obtenu sous forme du produit réactionnel d'un mono- ou diisocyanate aliphatique ou aromatique avec une matière colorante qui est un composant de colorant avec une fonctionnalité de groupe hydroxyle et un ou plusieurs autres matériaux entièrement saturés choisis parmi des alcools mono- et dihydriques, des monoamines primaires et secondaires, des diamines diprimaires, des amides fonctionnels et des amines avec une fonctionnalité hydroxyle.

2. Matériau suivant la revendication 1, obtenu sous forme d'un produit réactionnel, incluant au moins un amide fonctionnel choisi parmi ceux qui sont les produits réactionnels de monoamines primaires ou secondaires, facultativement avec une fonctionnalité hydroxyle, ou de diamines diprimaires, et de mélanges de ceux-ci, et d'acides carboxyliques mono- ou difonctionnels, avec également facultativement une fonctionnalité hydroxyle, et de mélanges de ceux-ci.

3. Matériau suivant l'une ou l'autre des revendications précédentes, que l'on peut obtenir en faisant réagir un mono- ou diisocyanate aliphatique ou aromatique avec au moins une quantité stoechiométrique:
(i) d'un composant de colorant avec une fonctionnalité de groupe hydroxyle;
(ii) d'un composant de colorant avec une fonctionnalité de groupe hydroxyle, suivi d'un seul alcool monohydrique ou d'un mélange d'alcools monohydriques; ou;
(iii) d'un composant de colorant avec une fonctionnalité de groupe hydroxyle, suivi d'un composant d'alcool dihydrique, suivi d'un composant d'alcool monohydrique;
(iv) d'un composant de colorant avec une fonctionnalité de groupe hydroxyle, suivi d'un seul composant de monoamines primaires ou secondaires ou d'un mélange de ceux-ci;
(v) d'un composant de colorant avec une fonctionnalité de groupe hydroxyle, suivi d'un composant de diamine diprimaire, suivi d'un composant de monoamine primaire;
(vi) d'un composant de colorant avec une fonctionnalité de groupe hydroxyle, suivi d'un composant de diamine diprimaire, suivi d'un composant d'alcool monohydrique;
(vii) d'un composant de colorant avec une fonctionnalité de groupe hydroxyle, suivi du produit réactionnel d'un équivalent d'un composant de diamine primaire avec un équivalent d'un acide monocarboxylique et un équivalent d'un acide monocarboxylique avec une fonctionnalité hydroxyle;
(viii) d'un composant de colorant avec une fonctionnalité hydroxyle, suivi du produit réactionnel d'un équivalent d'un composant de diamine diprimaire avec un équivalent d'un acide monocarboxylique;
(ix) d'un composant de colorant avec une fonctionnalité de groupe hydroxyle, suivi du produit réactionnel d'un équivalent d'une monoamine primaire avec une fonctionnalité de groupe hydroxyle, avec un équivalent d'acide monocarboxylique; ou
(x) d'un composant de colorant avec une fonctionnalité de groupe hydroxyle, suivi du produit réactionnel de (vii) ou de (viii), mais où la fonctionnalité acide est constituée d'un mélange de n'importe lequel entre deux ou plusieurs d'un acide monocarboxylique, d'un acide dicarboxylique et d'acides hydroxymonocarboxyliques.

4. Matériau suivant l'une ou l'autre des revendications 1 ou 2, dans lequel l'isocyanate est choisi parmi l'isophoronediisocyanate, le toluène-diisocyanate, le diphénylméthane-4,4-diisocyanate (MDI), l'hexaméthylène-1,6-diisocyanate, l'octadécylmonoisocyanate, le naphtalène-1,5-diisocyanate, le 3,3'-diméthyl-4,4'-biphényldiisocyanate, le dicyclohexylméthane,4,4'-diisocyanate, le triméthylhexaméthylène-diisocyanate et le tétraméthylènexylènediisocyanate.

5. Matériau suivant l'une ou l'autre des revendications 2 ou 3, que l'on peut obtenir à partir de réactifs qui incluent au moins un alcool monohydrique aliphatique choisi parmi des alcools C₁ à C₂₂.

6. Matériau suivant l'une ou l'autre des revendications 2 ou 3, que l'on peut obtenir à partir de réactifs qui incluent au moins un matériau d'alcool dihydrique éthérifié choisi parmi le propylèneglycolméthyléther (PGME), le dipropylèneglycolméthyléther (DPGME), le propylèneglycolphényléther (PPH) et le tripropylèneglycolbutyléther (TPGBE).

7. Matériau suivant l'une ou l'autre des revendications 2 ou 3, que l'on peut obtenir à partir de réactifs qui incluent au moins un composant d'alcool dihydrique estérifié monohydrique dans lequel l'acide d'estérification est un acide acrylique ou méthacrylique éthyléniquement insaturé.

8. Matériau suivant l'une ou l'autre des revendications 2 ou 3, que l'on peut obtenir à partir de réactifs qui incluent au moins un alcool dihydrique choisi parmi l'éthylèneglycol, le propylèneglycol, des polyéthylèneglycols, des polypropylèneglycols et l'hexane-1,6-diol.

9. Matériau suivant l'une ou l'autre des revendications 2 ou 3, que l'on peut obtenir à partir de réactifs qui incluent au moins une monoamine C₁-C₂₂ primaire ou secondaire choisie parmi l'éthylamine, l'octylamine, la dodécylamine, l'octadécylamine, l'hexadécylamine, la di-n-butylamine, la néopentadiamine, la N-méthyloctadécylamine, la di-n-suifamine et la di-n-cocoamine.

10. Matériau suivant l'une ou l'autre des revendications 2 ou 3, que l'on peut obtenir à partir de réactifs qui incluent au moins une diamine diprimaire choisie parmi l'isophoronediamine, la néopentanediamine, l'hexaméthylènediamine, l'éthylènediamine et des polyoxypropylènediamines.

11. Matériau suivant l'une ou l'autre des revendications 2 ou 3, que l'on peut obtenir à partir de réactifs qui incluent au moins un amide fonctionnel que l'on peut obtenir sous forme de produit réactionnel d'au moins une diamine choisie parmi l'éthylènediamine, la néopentanediamine, la 2,4,4-triméthylhexanediamine, l'isophoronediamine, la 2-butyl-2-éthyl-pentane-1,5-diamine, le 1,3-diaminopentane et la 2-méthylpentaméthylène-1,5-diamine.

12. Matériau suivant l'une ou l'autre des revendications 1 ou 2, que l'on peut obtenir sous forme de produit réactionnel d'au moins une amine avec une fonctionnalité hydroxyle choisie parmi l'éthanolamine, la diéthanolamine et la n-méthyléthanolamine.

13. Matériau suivant l'une ou l'autre des revendications 2 ou 3, que l'on peut obtenir à partir de réactifs qui incluent au moins un acide monocarboxylique choisi parmi l'acide stéarique, l'acide acétique, l'acide propanoïque, l'acide 3,5,5-triméthylhexanoïque, l'acide décanoïque, l'acide 2,2-diméthylpropanoïque, l'acide isooctanoïque, l'acide isoheptanoïque, l'acide isobutyrique ou l'acide isodécanoïque.

14. Matériau suivant l'une ou l'autre des revendications 2 ou 3, que l'on peut obtenir à partir de réactifs qui incluent au moins un acide monocarboxylique avec une fonctionnalité hydroxyle choisi parmi l'acide hydroxystéarique, l'acide 16-hydroxyhexadécanoïque, l'acide 2-hydroxy-isobutyrique, l'acide 12-hydroxydodécanoïque ou l'acide hydroxyhexanoïque.

15. Matériau suivant l'une quelconque des revendications précédentes, avec un poids moléculaire moyen allant de 500 à 3.000, de préférence de 600 à 2.000.

16. Encre thermofusible comprenant un matériau suivant l'une quelconque des revendications précédentes.
